# EUROPÄISCHE PATENTANMELDUNG

(11) **EP 3 072 391 A1**
(43) Veröffentlichungstag der Anmeldung: **28.09.2016**
(21) Anmeldenummer: 16162179.2
(22) Anmeldetag: 24.03.2016
(51) Int. Cl.: A01K 7/02

(54) **VORRICHTUNG ZUR BEREITSTELLUNG EINER FLÜSSIGEN VORMISCHUNG FÜR EINE TRÄNKEANLAGE UND TRÄNKEANLAGE MIT EINER DERARTIGEN VORRICHTUNG**

(30) Priorität: 24.03.2015 DE 102015003776
(71) Anmelder: Lührs, Friedrich, 49453 Rehden /Lohaus (DE)
(72) Erfinder: Lührs, Friedrich, 49453 Rehden /Lohaus (DE)
(74) Vertreter: Kleine, Hubertus

(57) **Zusammenfassung**

Die Erfindung betrifft eine Vorrichtung zur Bereitstellung einer flüssigen Vormischung (7) aus Trinkwasser und Medikamenten oder Zusatzstoffen (1) für eine Tränkeanlage. Die Vorrichtung zeichnet sich dadurch aus, dass sie einen Vormischbehälter (2) und eine Dosiereinrichtung (10) für die Medikamente oder Zusatzstoffe (1) aufweist und dazu eingerichtet ist, eine von der Dosiereinrichtung (10) abgegebene vorbestimmte Menge der Medikamente oder Zusatzstoffe (1) einer ebenfalls vorbestimmten Menge an Trinkwasser beizufügen und in dem Vormischbehälter (2) als flüssige Vormischung (7) vorzuhalten. Die Erfindung betrifft weiterhin eine Tränkeanlage mit einem proportional arbeitenden Dosiergerät (4) zur Beimischung einer flüssigen Vormischung (7) von Trinkwasser und Medikamenten oder Zusatzstoffen (1) zu weiterem Trinkwasser (9) mit einer derartigen Vorrichtung.

## Beschreibung

Die Erfindung betrifft eine Vorrichtung zur Bereitstellung einer flüssigen Vormischung aus Trinkwasser und Medikamenten oder Zusatzstoffen für eine Tränkeanlage sowie eine Tränkeanlage mit einer solchen Vorrichtung.

In modernen Tieraufzuchtsanlagen ist es üblich, den Tieren über das Trinkwasser Medikamente oder Zusatzstoffe zuzuführen. Zu diesem Zweck wird ein Teil des Trinkwassers in einen Behälter gefüllt und mit dem Medikament oder Zusatzstoff vermischt. Die Menge dieser Mischung wird in der Regel für den täglichen Verbrauch angesetzt. Diese Vormischung wird über ein proportional arbeitendes Dosiergerät dem Rest des Trinkwassers zugeführt, sodass die Tiere die gewünschte Menge an Medikamenten oder Zusatzstoffen aufnehmen können.

Nachteilig hierbei ist, dass eine große Menge an vorgemischtem Trinkwasser, d.h. der genannten Vormischung, über eine lange Zeit chemisch, biologisch und strukturell stabil gehalten werden muss. Dieses ist bei bestimmten Medikamenten nicht möglich, da diese im angesetzten Trinkwasser reagieren und einen erheblichen Teil ihrer therapeutischen Wirkung verlieren.

Es ist eine Aufgabe der vorliegenden Erfindung, die Bereitstellung der Vormischung so zu modifizieren, dass eine lange Lagerzeit der Vormischung der Medikamente oder Zusatzstoffe vermieden wird und der Aufwand zum Herstellen der Vormischung verringert wird.

Diese Aufgabe wird gelöst durch eine Vorrichtung bzw. eine Tränkeanlage mit den Merkmalen des jeweiligen unabhängigen Anspruchs. Vorteilhafte Ausgestaltungen und Weiterbildungen der Vorrichtung sind Gegenstand der abhängigen Ansprüche.

Eine erfindungsgemäße Vorrichtung weist einen Vormischbehälter und eine Dosiereinrichtung für Medikamente oder Zusatzstoffe auf. Sie ist dazu eingerichtet, eine von der Dosiereinrichtung abgegebene vorbestimmte Menge der Medikamente oder Zusatzstoffe einer ebenfalls vorbestimmten Menge an Trinkwasser beizufügen und in dem Vormischbehälter als flüssige Vormischung vorzuhalten.

Mithilfe der Dosiereinrichtung kann die Vorrichtung die Vormischung automatisch bedarfsgerecht bereitstellen. Auf diese Weise kann ohne Mehraufwand für den Benutzer auf das Anmischen einer großen Menge an Vormischung, die entsprechend einer längeren Lagerzeit unterworfen ist, verzichtet werden.

In einer vorteilhaften Ausgestaltung der Vorrichtung ist dem Vormischbehälter ein Füllstandssensor zugeordnet. Im Betrieb kann dieser Füllstandsensor ausgewertet werden, wobei beim Unterschreiten eines vorbestimmten Füllstands ein Anmischvorgang für eine neue Charge an Vormischung initiiert wird. Zur Steuerung der Vorrichtung ist bevorzugt eine Steuereinrichtung, beispielsweise in Form eines Computers (Rechners) vorgesehen.

In einer weiteren vorteilhaften Ausgestaltung der Vorrichtung ist ein Ventil an einem Wasserzufluss der Vorrichtung angeordnet, wobei das Ventil gesteuert geöffnet werden kann, um Trinkwasser in den Vormischbehälter einzulassen. Um ein gewünschtes Mischungsverhältnis an Medikament oder Zusatzstoff und Trinkwasser im Vormischbehälter einzustellen, wird von der Dosiereinrichtung eine vorgegebene Menge an Medikament oder Zusatzstoff in den Vormischbehälter gegeben. Zu diesem Zweck kann die Dosiereinrichtung eine Pumpe aufweisen, die in einem Arbeitszyklus eine vorbestimmte Menge des Medikaments oder Zusatzstoffs abgibt. Eine solche Pumpe kann beispielsweise eine Schlauchpumpe oder eine Kolbenpumpe sein. Die dosierte Menge an Medikament oder Zusatzstoff wird mit einer berechneten Menge an Trinkwasser im Vormischbehälter vermischt, wobei zur Bestimmung der Menge an Trinkwasser ein Durchflussmengenzähler im Wasserzufluss angeordnet sein kann, der von der genannten Steuereinrichtung ausgewertet wird. Alternativ zu einem Durchflussmengenzähler kann auch vorgesehen sein, bei bekannter Einlaufgeschwindigkeit des Trinkwassers in den Vormischbehälter über eine entsprechende Zeit, in der das Ventil geöffnet ist, Rückschlüsse auf die eingelassene Wassermenge zu erhalten. In diesem Fall wird bevorzugt ein konstanter Druck am Wasserzufluss eingestellt, beispielsweise durch einen vorgeschalteten Druckminderer, sodass eine Korrelation zwischen der Öffnungszeit des Ventils am Vormischbehälter und der eingelassenen Wassermenge gegeben ist.

In einer weiteren vorteilhaften Ausgestaltung der Vorrichtung ist vorgesehen, dass eine Kammer ausgebildet ist, in die die Medikamente und Zusatzstoffe eindosiert werden und die durch eine als Sieb ausgebildete Fläche mit dem Vormischbehälter verbunden ist. Auf diese Weise wird sichergestellt, dass nur vollständig aufgelöstes Medikament oder Zusatzstoff in den Behälter gelangt. Dabei kann vorgesehen sein, dass das eindosierte Trinkwasser in die Kammer eingesprüht wird, um das Auflösen der zu dosierenden Medikamente oder Zusatzstoffe zu unterstützen. Die Kammer kann separat vom Vormischbehälter ausgebildet sein oder ein abgeteilter Teil des Vormischbehälters sein.

In einer weiteren vorteilhaften Ausgestaltung weist die Vorrichtung ein Rührwerk mit einem drehbaren Rührer auf, wobei der Rührer in dem Vormischbehälter angeordnet ist. Auf diese Weise kann das Auflösen der zu dosierenden Medikamente oder Zusatzstoffe unterstützt werden und es kann verhindert werden, dass eine Entmischung während der Standzeit erfolgt. Bevorzugt ist der Rührer bodennah in dem Vormischbehälter angeordnet. Er kann durch einen unterhalb des Vormischbehälters angeordneten Motor betrieben werden, wobei eine Wellendichtung vorgesehen ist, um eine Welle des Rührers an ihrer Durchführung durch die Wandung des Vormischbehälters abzudichten. Alternativ ist auch eine Anordnung des Motors oberhalb des Vormischbehälters möglich, wobei der Rührer über eine entsprechend lange Welle mit dem Motor gekoppelt ist.

Eine erfindungsgemäße Tränkeanlage mit einem proportional arbeitenden Dosiergerät zur Beimischung einer flüssigen Vormischung von Trinkwasser und Medikamenten oder Zusatzstoffen zu weiterem Trinkwasser zeichnet sich durch eine derartige Vorrichtung aus, mit der die flüssigen Vormischung bereitgestellt wird.

Die Erfindung wird nachfolgend anhand eines Ausführungsbeispiels mithilfe von Figuren näher erläutert. Die Figuren zeigen:
- Fig. 1: eine schematische Ansicht eines Teils einer Tränkeanlage mit einer Vorrichtung zur Bereitstellung einer flüssigen Vormischung; und

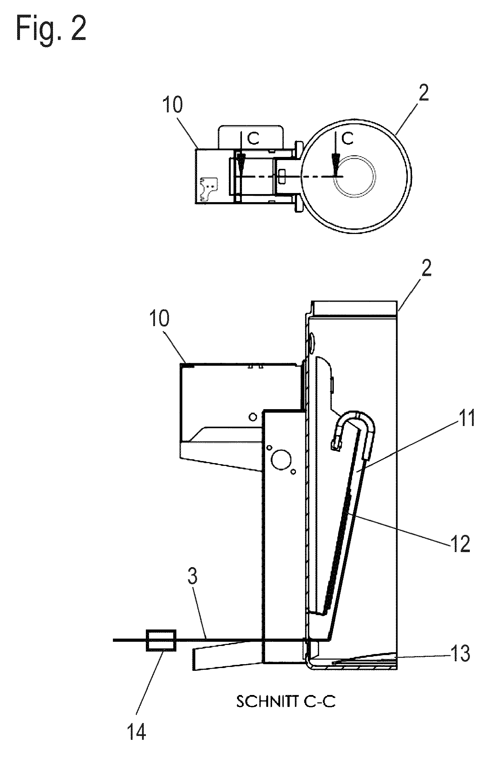

- Fig. 2: zwei unterschiedliche Detailansichten der Vorrichtung gemäß Fig. 1.

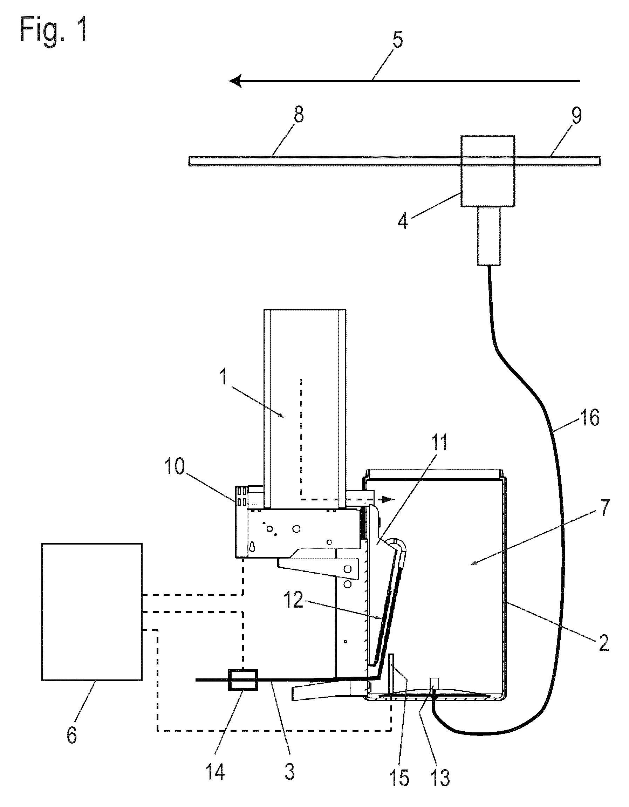

Fig. 1 zeigt einen Teil einer Tränkeanlage für Tiere. Eine Trinkwasserleitung 5, die nur schematisch dargestellt ist, versorgt Tiere mit einer Trinkwasseraufbereitung 8. Die Trinkwasseraufbereitung 8 wird von einem proportional arbeitenden Dosiergerät 4 aus zugeführtem Trinkwasser 9 erstellt, indem das Dosiergerät 4 eine Vormischung 7 in einem bestimmten Mischungsverhältnis automatisch dem Trinkwasser 9 beimischt. Die Vormischung 7 besteht aus Trinkwasser, dem Medikamente oder Zusatzstoffe 1 in einer bestimmten Konzentration beigefügt sind. Die Medikamente oder Zusatzstoffe 1 können ihrerseits flüssig oder fest und wasserlöslich sein.

Anmeldungsgemäß wird durch eine Vorrichtung parallel zum Wasserverbrauch der Tiere eine kleine Menge der Vormischung 7 aus Trinkwasser und Medikamenten oder Zusatzstoffen 1 automatisch hergestellt. Dieses wird durch einen Rechner 6, der als Steuereinrichtung für die Vorrichtung fungiert, gesteuert. Der Rechner 6 berechnet die gewünschte Konzentration in der Vormischung 7 aus den Sollvorgaben des Verhältnisses aus Vormischung zum Trinkwasser und der gewünschten Konzentration in der Trinkwasseraufbereitung 8. In den Rechner 6 wird das Verhältnis der Vormischung 7 als Basis eingegeben. Außerdem wird im Rechner 6 das Dosierverhalten des Medikamentes oder der Zusatzstoffe eingestellt. Der Anwender gibt nun das gewünschte Verhältnis von Medikamenten oder Zusatzstoffen zum Trinkwasser 9 in den Rechner 6 ein.

Die Vorrichtung weist einen Vormischbehälter 2 auf, in dem durch Einleiten von Trinkwasser aus einem Wasserzufluss 3 und den Medikamenten oder Zusatzstoffen 1 die Vormischung 7 hergestellt und eingelagert wird. Aus diesem Behälter wird die Vormischung 7 über eine Verbindungleitung 16 durch das proportional arbeitende Dosiergerät 4 in die Trinkwasserleitung 5 gefördert. Der Rechner 6 berechnet auf Grundlage der eingeleiteten Wassermenge und der gewünschten Konzentration in der Trinkwasseraufbereitung 8 die Dosierung der Medikamente oder der Zusatzstoffe 1.

In dem Vormischbehälter 2 ist eine Sensorik, beispielsweise ein Füllstandssensor 15, eingebaut, die dem Rechner 6 mitteilt, wenn der Füllstand eine bestimmte Höhe unterschreitet. Wird der bestimmte Füllstand unterschritten, öffnet der Rechner 6 über ein Ventil 14 den Wasserzufluss 3 und misst kontinuierlich die eingeflossene Wassermenge. Hierzu kann ein Durchflussmengenzähler am Wasserzufluss 3 vorgesehen sein. Alternativ kann nach entsprechender Eichung aus der Öffnungszeit des Ventils 14 auf die eingeflossene Wassermenge geschlossen werden. Dieses ist insbesondere dann möglich, wenn der Wasserzufluss 3 mit konstantem Wasserdruck beaufschlagt ist.

Zeitgleich steuert der Rechner 6 eine Dosiereinrichtung 10 für die Medikamente oder Zusatzstoffe 1, damit das eingelassene Trinkwasser und die Medikamente oder Zusatzstoffe 1 in den gewünschten Anteilen zusammen geführt werden. Die Dosiereinrichtung 10 weist einen Vorratsbehälter zur Aufnahme eines Vorrats der Medikamente oder Zusatzstoffe 1 auf.

Die Vormischung 7 wird somit von der Vorrichtung nicht kontinuierlich erstellt, sondern in Portionen (Chargen) vorgegebener Größe, die jeweils den Vormischbehälter 2 zu einem Teil oder maximal wieder befüllen. Die erstellte Menge der Vormischung 7 wird von dem Rechner 6 bevorzugt protokolliert. Da das Mischungsverhältnis der Vormischung 7 zum Trinkwasser 9 bei dem proportional arbeitenden Dosiergerät 4 bekannt ist, kann so die von den Tieren aufgenommene Menge an Trinkwasser 8 bestimmt werden, ohne dass hierfür ein eigener Wasserzähler benötigt wird.

Die eingeleitete Wassermenge aus dem Wasserzufluss 3 wird genutzt, um die Medikamente oder Zusatzstoffe 1 mit dem Wasser zu vermischen und ggf. aufzulösen. Um diesen Vorgang zu verbessern, kann in dem Vormischbehälter 2 eine Kammer 11 gebildet sein, in die die Medikamente oder Zusatzstoffe 1 eingegeben werden und mit zumindest einem Teil der Wassermenge besprüht werden. Die Verbindung zum Rest des Vormischbehälters 2 ist durch eine Siebfläche 12 ausgeführt.

Der Boden des Vormischbehälters 2 ist in etwa waagerecht ausgeführt. Um eine möglichst kleine Restmenge im Vormischbehälters 2 zu erhalten, ist der Absaugpunkt für das das proportional arbeitende Dosiergerät 4 als eine Art umgedrehten Teller dargestellt. In der flachen Absaugvorrichtung 13 ist ein Sieb eingefügt, das gröbere Schmutzteile und nicht vollkommen aufgelöste Medikamente bzw. Zusatzstoffe 1 nicht durch lässt.

Optional kann die Vorrichtung ein Rührwerk mit einem im Vormischbehälter 2 angeordneten drehbaren Rührer aufweisen. Auf diese Weise kann das Auflösen der zu dosierenden Medikamente oder Zusatzstoffe 1 unterstützt werden und zudem verhindert werden, dass eine Entmischung während der Standzeit erfolgt. Bevorzugt ist der Rührer bodennah in dem Vormischbehälter 2 angeordnet. Er kann durch einen unterhalb des Vormischbehälters 2 angeordneten Motor betrieben werden, wobei eine Wellendichtung vorgesehen ist, um eine Welle des Rührers an ihrer Durchführung durch die Wandung des Vormischbehälters 2 abzudichten. Alternativ ist auch eine Anordnung des Motors oberhalb des Vormischbehälters 2 möglich, wobei der Rührer über eine entsprechend lange Welle mit dem Motor gekoppelt ist.

Um die Löslichkeit der Medikamente oder Zusatzstoffe 1 zu verbessern, kann alternativ oder zusätzlich zu dem Rührwerk dem Wasserzufluss 3 ein Heizgerät vorgeschaltet werden.

Zusammenfassend wird durch die Vorrichtung erreicht, dass wasserlösliche Medikamente oder Zusatzstoffe 1 zeitnah zum sofortigen bzw. baldigen Verbrauch automatisch in dem Vormischbehälter 2 in Trinkwasser eindosiert und aufgelöst werden. Diese Vormischung wird von einem proportional arbeitenden Dosiergerät 4 in die Trinkwasseranlage 5 eingespeist. Die Menge der eindosierten Medikamente oder Zusatzstoffe 1 und eine errechnete Menge der Trinkwasseraufbereitung 8 werden von dem Rechner 6 gesteuert und aufgezeichnet.

### Bezugszeichen

- 1: Medikamente oder Zusatzstoffe
- 2: Vormischbehälter
- 3: Wasserzufluss
- 4: proportional arbeitendes Dosiergerät
- 5: Trinkwasserleitung
- 6: Rechner
- 7: Vormischung
- 8: Trinkwasseraufbereitung
- 9: Trinkwasser
- 10: Dosiereinrichtung
- 11: Kammer
- 12: Sieb
- 13: Absaugvorrichtung
- 14: Ventil
- 15: Füllstandssensor
- 16: Verbindungsleitung

## Patentansprüche

1. Vorrichtung zur Bereitstellung einer flüssigen Vormischung (7) aus Trinkwasser und Medikamenten oder Zusatzstoffen (1) für eine Tränkeanlage, **dadurch gekennzeichnet, dass** die Vorrichtung einen Vormischbehälter (2) und eine Dosiereinrichtung (10) für die Medikamente oder Zusatzstoffe (1) aufweist und dazu eingerichtet ist, eine von der Dosiereinrichtung (10) abgegebene vorbestimmte Menge der Medikamente oder Zusatzstoffe (1) einer ebenfalls vorbestimmten Menge an Trinkwasser beizufügen und in dem Vormischbehälter (2) als flüssige Vormischung (7) vorzuhalten.

2. Vorrichtung nach Anspruch 1, bei der dem Vormischbehälter (2) ein Füllstandssensor (15) zugeordnet ist.

3. Vorrichtung nach Anspruch 1 oder 2, aufweisend einen Wasserzufluss (3) mit einem gesteuerten Ventil (14), um die vorbestimmte Menge an Trinkwasser in den Vormischbehälter (2) einzulassen.

4. Vorrichtung nach Anspruch 2 und 3, die dazu eingerichtet ist, abhängig von einem Signal des Füllstandssensor (15) die Dosiereinrichtung (10) und das Ventil (14) anzusteuern.

5. Vorrichtung nach Anspruch 3 oder 4, bei der ein Durchflussmengenzähler vorgesehen ist, um die eingelassene Menge an Trinkwasser zu ermitteln.

6. Vorrichtung nach einem der Ansprüche 1 bis 5, bei der die Dosiereinrichtung (10) eine Pumpe aufweist, die in einem Arbeitszyklus eine vorbestimmte Menge des Medikaments oder Zusatzstoffs (1) abgibt.

7. Vorrichtung nach einem der Ansprüche 1 bis 6, bei der eine Kammer (11) ausgebildet ist, in die die Medikamente und Zusatzstoffe (1) eindosiert werden und die durch eine als Sieb (12) ausgebildete Fläche mit dem Vormischbehälter (2) verbunden ist.

8. Vorrichtung nach einem der Ansprüche 1 bis 7, aufweisend ein Rührwerk mit einem drehbaren Rührer, der in dem Vormischbehälter (2) angeordnet ist.

9. Vorrichtung nach Anspruch 8, bei der der Rührer bodennah in dem Vormischbehälter (2) angeordnet ist.

10. Tränkeanlage mit einem proportional arbeitenden Dosiergerät (4) zur Beimischung einer flüssigen Vormischung (7) von Trinkwasser und Medikamenten oder Zusatzstoffen (1) zu weiterem Trinkwasser (9), **dadurch gekennzeichnet, dass** die Tränkeanlage eine Vorrichtung gemäß einem der Ansprüche 1 bis 9 zu Bereitstellung der flüssigen Vormischung (7) aufweist.
